# EUROPEAN PATENT APPLICATION

(11) **EP 4 610 264 A1**
(43) Date of publication of application: **03.09.2025**
(21) Application number: 23882358.7
(22) Date of filing: 03.10.2023
(51) Int. Cl.: C07F 7/08, C08G 77/14, C09D 5/00, C09D 183/04

(54) **ORGANOPOLYSILOXANE, ADHESION-IMPARTING AGENT, AQUEOUS COATING MATERIAL COMPOSITION, AND PRIMER COMPOSITION**

(30) Priority: 24.10.2022 JP 2022169656
(71) Applicant: SHIN-ETSU CHEMICAL CO., LTD., Tokyo 1000005 (JP)
(72) Inventor: TSUCHIDA, Kazuhiro, Annaka-shi Gunma 379-0224 (JP)
(74) Representative: Mewburn Ellis LLP
(86) International application number: PCT/JP2023/036008
(87) International publication number: WO 2024/090149

(57) **Abstract**

Provided is a water-soluble organopolysiloxane which is represented by formula (1) and exhibits excellent storage stability. 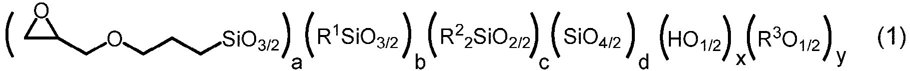 (In the formula, R¹ is a monovalent hydrocarbon group having 1-10 carbon atoms, R² moieties are each independently a monovalent hydrocarbon group having 1-10 carbon atoms which may be substituted with a glycidyloxy group, R³ is a methyl group or an ethyl group, a, b, c and d are numbers that satisfy the relationships a ≥ 0.5, b ≥ 0, c > 0, d ≥ 0, and a+b+c+d = 1, and x and y are numbers that satisfy the relationships x ≥ 1 and y ≤ 0.5.)

## Description

### TECHNICAL FIELD

This invention relates to an organopolysiloxane, tackifier, aqueous coating composition, and primer composition, and more particularly, to an organopolysiloxane comprising 3-glycidyloxypropyl-containing siloxane units and diorganosiloxane units as constituent units and having a silanol group, a tackifier comprising the organopolysiloxane, an aqueous coating composition comprising the organopolysiloxane, and a primer composition comprising the organopolysiloxane.

### BACKGROUND ART

Compounds having at least two different reactive functional groups per molecule are known as coupling agents for coupling different materials. Among others, silane coupling agents having a hydrolyzable silyl group such as alkoxysilyl as one reactive group and a variety of organic reactive groups such as primary amino, secondary amino, glycidyl ether, methacryloyl, ureido, vinyl, mercapto, and isocyanate groups are known as primers for enhancing the adhesion of coating materials and tackifiers to be added to coating compositions.

There is known a composition comprising a reactive organopolysiloxane obtained by using a silane coupling agent as a monomer and effecting hydrolytic condensation of a hydrolyzable silyl group therewith. For example, Patent Document 1 proposes a coating material and an adhesive sheet containing an organosilsesquioxane having an epoxy group. Patent Documents 2 to 4 propose to use as a tackifier oligomers with a relatively low molecular weight, obtained from partial hydrolytic condensation of a silane coupling agent having an epoxy group.

As compared with silane coupling agents, the use of oligomers and/or polymers obtained from hydrolytic condensation of silane coupling agents offers the advantage that because of a high molecular weight and low volatility, the risk of losing an active component in drying and other steps is eliminated.

Another advantage is the reduced generation of volatile organic compounds (VOCs). It is understood from the recent aspect of reducing environmental loads like changeover of solvent base coating materials to water base or solventless coating materials that as compared with silane coupling agents which generate alcohols upon hydrolysis, the oligomers having undergone partial hydrolysis are advantageous in that the generation of alcohol per unit weight of the active component is reduced. The oligomers are regarded as adequate materials to meet the demand.

With the aim at further VOC reduction, aqueous solutions containing hydrolytic condensates obtained from complete hydrolysis of silane coupling agents and removal of generated alcohols are proposed. Patent Documents 5 to 7 propose aqueous silane compositions comprising hydrolytic condensates containing a functional group such as amino, mercapto or carboxy. Patent Document 8 proposes an aqueous silane composition comprising a hydrolytic condensate having an ethylene glycol group.

These aqueous silane compositions are insufficient in storage stability. Since hydrolytic condensates of silane coupling agents are highly active, the aqueous silane composition must take the form of aqueous solution as viewed from the aspects of handling and safety.

### PRIOR ART DOCUMENTS

### PATENT DOCUMENTS

Patent Document 1: JP-A 2019-143161
Patent Document 2: WO 2018/34232
Patent Document 3: JP-A 2018-127507
Patent Document 4: JP-A 2022-27097
Patent Document 5: EP 0675128
Patent Document 6: JP-A 2016-44278
Patent Document 7: JP-A 2015-34097
Patent Document 8: JP-A 2017-114852

### SUMMARY OF INVENTION

### TECHNICAL PROBLEM

An object of the invention, which has been made under the above-mentioned circumstances, is to provide a water-soluble organopolysiloxane containing an organic functional group and having excellent storage stability.

### SOLUTION TO PROBLEM

Making extensive investigations to attain the above object, the inventor has found that an organopolysiloxane containing specific amounts of siloxane units having 3-glycidyloxypropyl group and diorganosiloxy units and possessing a silanol group has satisfactory storage stability and that an aqueous composition comprising the organopolysiloxane is fully adhesive and adequate as a primer. The invention is predicated on this finding.

Accordingly, the invention is as defined below.
1. An organopolysiloxane having the formula (1): 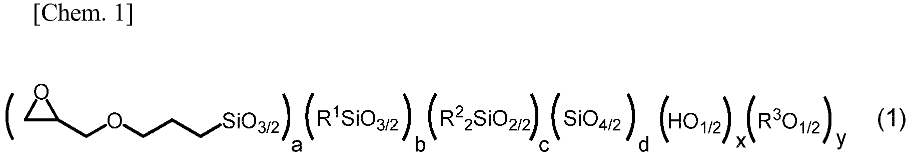 wherein R¹ is a C₁-C₁₀ monovalent hydrocarbon group, R² is each independently a C₁-C₁₀ monovalent hydrocarbon group which may be substituted with a glycidyloxy group, R³ is methyl or ethyl, a, b, c and d are numbers in the range: a ≥ 0.5, b ≥ 0, c > 0, d ≥ 0, and a+b+c+d = 1, x and y are numbers in the range: x ≥ 1 and y ≤ 0.5.
2. The organopolysiloxane of 1 wherein a, b, c and d are numbers in the range: 0.5 ≤ a ≤ 0.9, b = 0, 0.1 ≤ c ≤ 0.5, and d = 0.
3. A tackifier comprising the organopolysiloxane of 1 or 2.
4. An aqueous coating composition comprising the organopolysiloxane of 1 or 2.
5. A primer composition comprising the organopolysiloxane of 1 or 2.

### ADVANTAGEOUS EFFECTS OF INVENTION

The organopolysiloxane having a highly reactive epoxy group is effective for modifying organic resins and enhancing the adhesion to resin substrates, and has satisfactory stability. The pot life can be prolonged. The organopolysiloxane having a silanol group is fully reactive with inorganic substrates, highly water soluble, and useful as an additive to aqueous coating compositions.

### BRIEF DESCRIPTION OF DRAWINGS

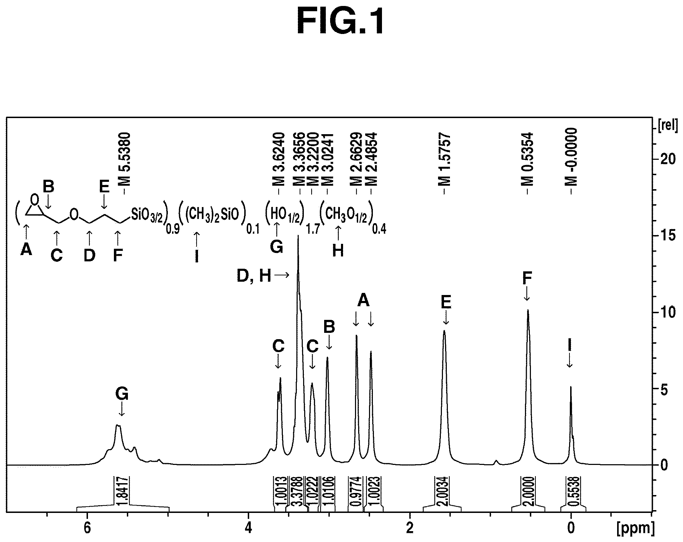

[FIG. 1] FIG. 1 is a diagram of the ¹H-NMR spectrum of organopolysiloxane Ep1 obtained in Example 1-1.

### DESCRIPTION OF EMBODIMENTS

Now the invention is described in detail.

### (1) Organopolysiloxane

One embodiment of the invention is an organopolysiloxane having the formula (1).

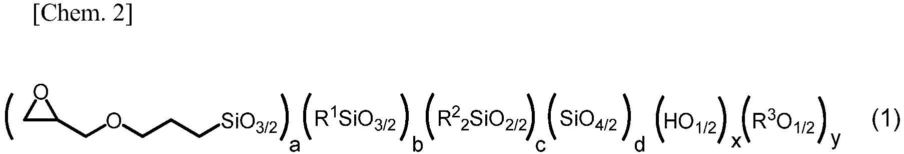

In formula (1), R¹ is a C₁-C₁₀, preferably C₁-C₆ monovalent hydrocarbon group, which may be straight, branched or cyclic. Examples thereof include alkyl groups such as methyl, ethyl, n-propyl, n-butyl, n-pentyl, n-hexyl, n-heptyl, n-octyl, and n-decyl; cycloalkyl groups such as cyclopentyl and cyclohexyl; alkenyl groups such as vinyl, allyl, butenyl, hexenyl and octenyl; and aryl groups such as phenyl and naphthyl. Of these, methyl, ethyl, n-propyl and phenyl are preferred; methyl and ethyl are more preferred; methyl is most preferred.

R² is each independently a C₁-C₁₀, preferably C₁-C₆ monovalent hydrocarbon group which may be substituted with a glycidyloxy group. Examples thereof include those exemplified above for R¹, and glycidyloxy-substituted alkyl groups such as glycidyloxypropyl. Of these, methyl, ethyl, n-propyl, glycidyloxypropyl and phenyl are preferred; methyl and ethyl are more preferred; methyl is most preferred.

R³ is methyl or ethyl.

The subscripts a, b, c and d, which are indicative of the molar fractions of siloxane units, are numbers satisfying a+b+c+d = 1.

The subscript "a" is a number of at least 0.5, preferably 0.5 to 0.9. If a is less than 0.5, the effective amount of epoxy groups is small, the adhesion-improving effect is not expectable, the organopolysiloxane having formula (1) is highly viscous, gum-like or solid, awkward to handle, and less water soluble.

The subscript "b" is a number of at least 0. As viewed from the amount of epoxy groups in the organopolysiloxane, b = 0 is preferred.

The subscript "c" is a number in excess of 0, preferably a number of 0.1 to 0.5. If c = 0, the organopolysiloxane takes a structure consisting of trisiloxane and tetrasiloxane units, is insufficient in storage stability because of high reactivity of silanol groups, and becomes inadequate in application.

The subscript "d" is a number of at least 0. As viewed from the reactivity of silanol groups, d = 0 is preferred.

The subscripts x and y indicate the moles of hydroxy and alkoxy groups per mole of silicon atom.

The subscript "x" is a number of at least 1. From the aspect of storage stability, x is preferably a number of 1 to 2. An organopolysiloxane wherein x is less than 1 is inferior in water solubility and reactivity with inorganic substrates.

The subscript y is a number of up to 0.5. From the aspect of reducing the amount of alcohol resulting from hydrolysis, y is preferably a number of up to 0.4.

Preferably the organopolysiloxane has the formula (1a).

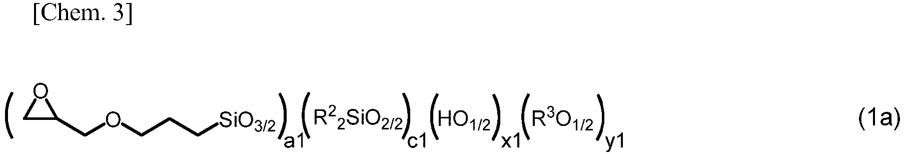

In formula (1a), R² and R³ are as defined above; a1 and c1 are numbers in the range: 0.5 ≤ a1 ≤ 0.9, 0.1 ≤ c1 ≤ 0.5, and a1+c1 = 1; x1 and y1 are numbers in the range: x1 ≥ 1 and y1 ≤ 0.5.

It is preferred from the aspects of water solubility and handling that the organopolysiloxane has a weight average molecular weight (Mw) of 500 to 10,000, more preferably 500 to 1,000. It is noted that the Mw is measured by gel permeation chromatography (GPC) versus polystyrene standards.

The organopolysiloxane has a kinematic viscosity of preferably 100 to 500 mm²/s, more preferably 200 to 450 mm²/s. It is noted that the kinematic viscosity is measured at 25°C by a Cannon-Fenske viscometer.

The contents of water as an impurity and liberated alcohol in the organopolysiloxane are preferably up to 1% by weight. Although water does not fall in the concept of VOC, water can react with epoxy groups if present in excess. When the organopolysiloxane is stored for a long time, the water content is desirably minimized.

### (2) Preparation of organopolysiloxane

Although the method of preparing the organopolysiloxane is not particularly limited, the organopolysiloxane can be prepared, for example, by subjecting 3-glycidyloxypropyltrimethoxysilane or 3-glycidyloxypropyltriethoxysilane having the formula (i) or a mixture thereof, a diorganodimethoxysilane or diorganodiethoxysilane having the formula (iii) or a mixture thereof, and optionally, one or more of alkoxysilanes containing an organotrimethoxysilane or organotriethoxysilane having the formula (ii) or a mixture thereof, and tetramethoxysilane or tetraethoxysilane having the formula (iv) or a mixture thereof to co-hydrolytic condensation under acidic conditions.

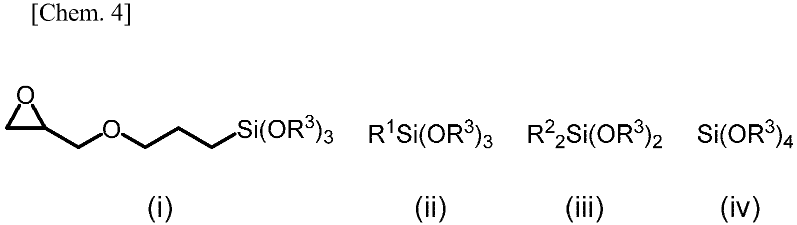

Herein R¹ to R³ are as defined above.

Examples of the diorganodimethoxysilane or diorganodiethoxysilane having formula (iii) include dimethyldimethoxysilane, dimethyldiethoxysilane, diethyldimethoxysilane, diethyldiethoxysilane, methylethyldimethoxysilane, methylethyldiethoxysilane, methylpropyldimethoxysilane, methylpropyldiethoxysilane, 3-glycidyloxypropylmethyldimethoxysilane, 3-glycidyloxypropylmethyldiethoxysilane, cyclopentylmethyldimethoxysilane, cyclopentylmethyldiethoxysilane, cyclohexylmethyldimethoxysilane, cyclohexylmethyldiethoxysilane, methylphenyldimethoxysilane, methylphenyldiethoxysilane, diphenyldimethoxysilane, diphenyldiethoxysilane, methyloctyldimethoxysilane, and methyloctyldiethoxysilane.

Examples of the organotrimethoxysilane or organotriethoxysilane having formula (ii) include trialkoxysilanes such as methyltrimethoxysilane, methyltriethoxysilane, ethyltrimethoxysilane, ethyltriethoxysilane, vinyltrimethoxysilane, vinyltriethoxysilane, propyltrimethoxysilane, propyltriethoxysilane, butyltrimethoxysilane, butyltriethoxysilane, hexyltrimethoxysilane, hexyltriethoxysilane, cyclohexyltrimethoxysilane, cyclohexyltriethoxysilane, phenyltrimethoxysilane, phenyltriethoxysilane, octyltrimethoxysilane, octyltrimethoxysilane, decyltrimethoxysilane, and decyltriethoxysilane.

Also, hydrolytic condensates of the foregoing silane compounds may be used. They may be used alone or in admixture of two or more.

Preferably the amounts of the silane monomers used are adjusted in accordance with the molar fractions (the values of "a" to "d" in formula (1)) of siloxane units of which the desired organopolysiloxane is constructed.

The amount of water used in the hydrolysis of an alkoxysilane monomer is preferably 0.8 to 1.1 moles, more preferably 1.0 to 1.1 moles per mole of alkoxysilyl group, as viewed from the aspects of suppressing reaction with epoxy groups and reducing residual alkoxysilyl groups.

The acid for rendering hydrolytic reaction conditions acidic is not particularly limited as long as it is a commercially available Bronsted acid. Among others, formic acid, acetic acid, citric acid, hydrochloric acid, and nitric acid are preferred from the aspect of availability. The amount of the acid used is preferably 0.0001 to 0.01 mole per mole of the silane monomer as viewed from the aspect of preventing water solubility from lowering due to an increase of the molecular weight of an organopolysiloxane through excessive dehydrating condensation reaction between silanols and a reduction of the content of silanol groups.

In the hydrolytic reaction, an organic solvent may be used if necessary as long as the reaction is not retarded. The organic solvent used herein is preferably one compatible with the reactant, water. Alcohols, esters, ketones and ethers are preferred. Organic solvents having a lower boiling point are preferred, and organic solvents having a boiling point of up to 150°C under atmospheric pressure are desired when the distillation conditions under which the generated alcohol is removed are taken into account.

Examples of the alcohol include methanol, ethanol, propanol, isopropanol, butanol, isobutanol, pentyl alcohol, neopentyl alcohol, hexyl alcohol, and cyclohexyl alcohol.

Examples of the ester include ethyl acetate and butyl acetate.

Examples of the ketone include acetone, methyl ethyl ketone, and cyclohexanone.

Examples of the ether include tetrahydrofuran, tetrahydropyran and dioxane.

The hydrolytic reaction temperature is preferably 55 to 70°C and the reaction time is preferably 1 to 5 hours.

The step of hydrolytic reaction of a silane monomer is preferably followed by the step of distilling off water, the organic solvent and the alcohol resulting from hydrolysis of alkoxysilyl groups, under reduced pressure at a temperature of 30 to 80°C.

The inventive organopolysiloxane may be used as a tackifier or adhesion-providing agent in curable compositions such as coating compositions. Because of satisfactory water solubility, the organopolysiloxane may also be used to formulate an aqueous coating composition.

### (3) Aqueous coating composition

Another embodiment of the invention is an aqueous coating composition comprising the organopolysiloxane, which may be used alone or in admixture of two or more.

The aqueous coating composition preferably contains water as a solvent. In particular, an aqueous solution containing water as a sole solvent is preferred. The amount of the organopolysiloxane in the composition is preferably 5 to 50% by weight, more preferably 10 to 40% by weight.

Examples of the aqueous coating composition include compositions containing aqueous resins, such as aqueous epoxy and urethane resin compositions. The organopolysiloxane is used as one component in these aqueous resin compositions.

Exemplary of the aqueous resin are aqueous epoxy resins and aqueous polyurethane resins as well as aqueous polyester resins and aqueous acrylic resins.

The aqueous coating composition may contain optional additives such as organic solvents, antioxidants, UV absorbers, photo-stabilizers, thickeners, dispersants, and adhesion-promoters as long as the benefits of the invention are not impaired.

The method of preparing the aqueous coating composition is not particularly limited. One exemplary method is by mixing the organopolysiloxane with a solvent, optionally an aqueous resin and other additives in the standard way.

A coating film may be obtained by coating the aqueous coating composition onto a predetermined substrate directly or via another layer, typically a primer layer, and drying in an environment of 20 to 50°C and RH 30 to 60% for 1 to 60 minutes.

Exemplary of the substrate are plastic moldings, wood products, ceramics, glass, metals, and composites thereof although the substrate is not particularly limited.

The technique of coating the aqueous coating composition is not particularly limited and may be selected from prior art well-known techniques. Various coating techniques are included, for example, brush coating, wipe coating, spraying, dipping, bar coating, flow coating, roll coating, curtain coating, spin coating, and knife coating.

### (4) Primer composition

The organopolysiloxane may be advantageously used as a coupling component or aqueous reactive binder in aqueous primer compositions or coating compositions.

The primer composition of the invention contains the organopolysiloxane, which may be used alone or in admixture of two or more.

The primer composition preferably contains water as a solvent. In particular, an aqueous solution containing water as a sole solvent is preferred. The amount of the organopolysiloxane in the composition is preferably 5 to 50% by weight, more preferably 10 to 40% by weight.

The primer composition may contain optional additives as long as the benefits of the invention are not impaired. Exemplary additives are as exemplified above for the aqueous coating composition.

The method of preparing the primer composition and the method of forming a primer layer are not particularly limited. Exemplary methods are as exemplified for the aqueous coating composition.

On the surface of the primer layer, another layer may be formed. Examples of the other layer include cover layers in the form of cured coatings of aqueous resin compositions containing aqueous acrylic resins, aqueous polyester resins, aqueous epoxy resins, and aqueous urethane resins. Of these, cover layers in the form of cured coatings of aqueous urethane resin compositions are preferred. Exemplary coating layer-forming methods are as exemplified for the aqueous coating composition.

### EXAMPLES

Examples and Comparative Examples are given below for further illustrating the invention although the invention is not limited thereto. In Examples, "parts" and "%" are by weight unless otherwise stated. GPC and proton nuclear magnetic resonance (¹H-NMR) spectroscopy analyses are carried out under the following conditions. The kinematic viscosity is measured at 25°C by a Cannon-Fenske viscometer.

### (1) GPC analysis conditions

| | |
|---|---|
| Instrument: | HLC-8320GPC by Tosoh Corp. |
| Developing solvent: | tetrahydrofuran (THF) |
| Flow rate: | 0.6 mL/min |
| Detector: | differential refractive index detector (RI) |
| Column: | TSK Guardcolumn SuperH-H |
| | TSKgel Super HM-N (6.0mm I.D. × 15cm × 1) |
| | TSKgel SuperH2500 (6.0mm I.D. × 15 cm × 1) (all by Tosoh Corp.) |
| Column temperature: | 40°C |
| Sample injection volume: | 50 µL (THF solution with concentration 2.0%) |
| Standard: | monodisperse polystyrene |

### (2) ¹H-NMR spectroscopy analysis conditions

| | |
|---|---|
| Instrument: | Avance III400 by Bruker |
| Solvent: | CDCl₃ |
| Internal standard: | tetramethylsilane (TMS) |

### [1] Synthesis of organopolysiloxane

### [Example 1-1]

A 1-L three-neck flask equipped with a stirrer, condenser, dropping funnel and thermometer was charged with 425 g (1.8 mol) of 3-glycidyloxypropyltrimethoxysilane and 24 g (0.2 mol) of dimethyldimethoxysilane. To the flask, 104.4 g of 0.2% hydrochloric acid (providing 5.8 mol of water) was added dropwise while the flask was controlled at an internal temperature of 20-40°C. At the end of addition, stirring was continued at 70°C for 1 hour, followed by vacuum distillation at 70°C to remove the alcohol resulting from hydrolytic reaction and the excessive water. There was obtained organopolysiloxane Ep1 as colorless transparent liquid.

The organopolysiloxane had a kinematic viscosity of 429 mm²/s at 25°C, a functional group (epoxy group) content of 202 g/mol, and a Mw of 610. On ¹H-NMR and GPC analyses, organopolysiloxane Ep1 was of the structure having the following formula (2). FIG. 1 shows its ¹H-NMR spectrum.

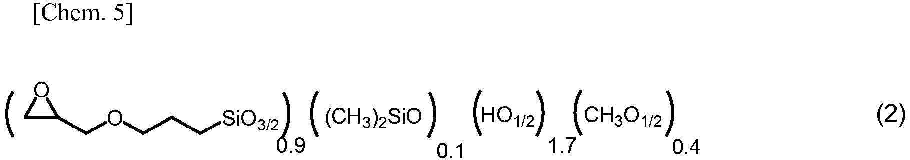

### [Example 1-2]

The same procedure as in Example 1-1 was repeated except that 236 g (1.0 mol) of 3-glycidyloxypropyltrimethoxysilane, 120 g (1.0 mol) of dimethyldimethoxysilane, and 90 g of 0.2% hydrochloric acid (providing 5.0 mol of water) were used, obtaining organopolysiloxane Ep2 as colorless transparent liquid.

The organopolysiloxane had a kinematic viscosity of 218 mm²/s at 25°C, a functional group (epoxy group) content of 258 g/mol, and a Mw of 700. On ¹H-NMR and GPC analyses, organopolysiloxane Ep2 was of the structure having the following formula (3).

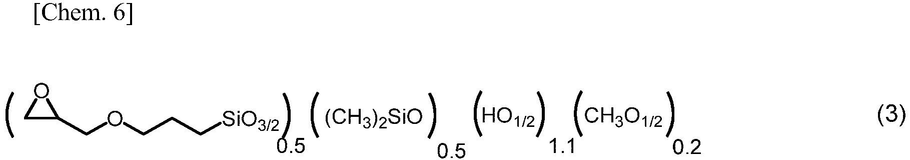

### [Example 1-3]

A 1-L three-neck flask equipped with a stirrer, condenser, dropping funnel and thermometer was charged with 425 g (1.8 mol) of 3-glycidyloxypropyltrimethoxysilane and 44 g (0.2 mol) of 3-glycidyloxypropylmethyldimethoxysilane. To the flask, 104.4 g of 0.2% hydrochloric acid (providing 5.8 mol of water) was added dropwise while the flask was controlled at an internal temperature of 20-40°C. At the end of addition, stirring was continued at 70°C for 1 hour, followed by vacuum distillation at 70°C to remove the alcohol resulting from hydrolytic reaction and the excessive water. There was obtained organopolysiloxane Ep3 as colorless transparent liquid.

The organopolysiloxane had a kinematic viscosity of 361 mm²/s at 25°C, a functional group (epoxy group) content of 200 g/mol, and a Mw of 510. On ¹H-NMR and GPC analyses, organopolysiloxane Ep3 was of the structure having the following formula (4).

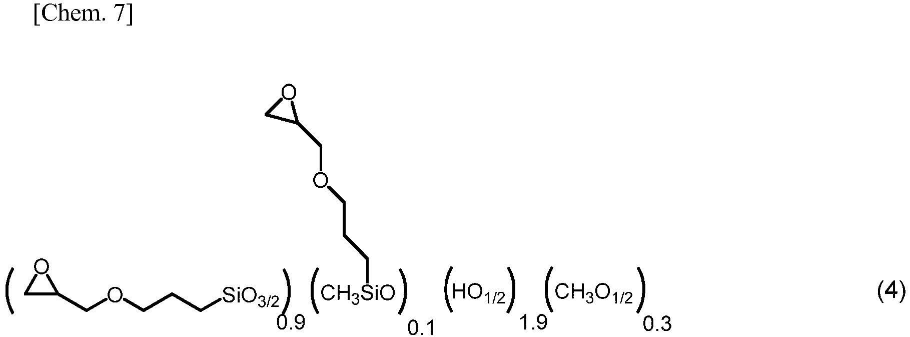

### [Comparative Example 1-1]

A 1-L three-neck flask equipped with a stirrer, condenser, dropping funnel and thermometer was charged with 472 g (2.0 mol) of 3-glycidyloxypropyltrimethoxysilane. To the flask, 108 g of 0.2% hydrochloric acid (providing 6.0 mol of water) was added dropwise while the flask was controlled at an internal temperature of 20-40°C. At the end of addition, stirring was continued at 70°C for 1 hour, followed by vacuum distillation at 70°C to remove the alcohol resulting from hydrolytic reaction and the excessive water. There was obtained organopolysiloxane Ep4 as colorless transparent liquid.

The organopolysiloxane had a kinematic viscosity of 726 mm²/s at 25°C, a functional group (epoxy group) content of 189 g/mol, and a Mw of 830. On ¹H-NMR and GPC analyses, organopolysiloxane Ep4 was of the structure having the following formula (5).

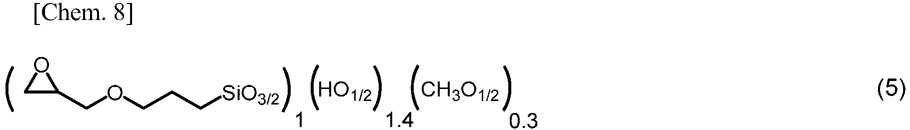

### [Comparative Example 1-2]

The same procedure as in Example 1-1 was repeated except that 141.6 g (0.6 mol) of 3-glycidyloxypropyltrimethoxysilane, 168 g (1.4 mol) of dimethyldimethoxysilane, and 82.8 g of 0.2% hydrochloric acid (providing 4.6 mol of water) were used, obtaining organopolysiloxane Ep5 as colorless transparent liquid.

The organopolysiloxane had a kinematic viscosity of 181 mm²/s at 25°C, a functional group (epoxy group) content of 288 g/mol, and a Mw of 930. On ¹H-NMR and GPC analyses, organopolysiloxane Ep5 was of the structure having the following formula (6).

Notably, when organopolysiloxane Ep5 was mixed with deionized water, it was incompatible and less water-soluble, with the mixture turning white cloudy.

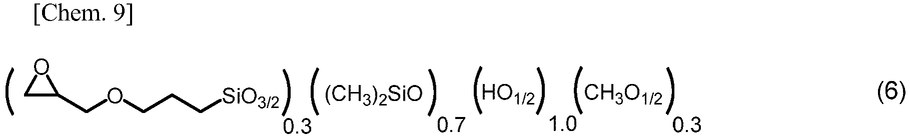

### [2] Storage stability test

### [Examples 2-1 to 2-3 and Comparative Example 2-1]

The organopolysiloxanes Ep1 to Ep4 synthesized in Examples 1-1 to 1-3 and Comparative Example 1-1 were stored at room temperature (25°C) and 5°C, they were evaluated for kinematic viscosity and water solubility immediately after preparation, after 1 month, 2 months and 3 months of storage. The results are shown in Table 1.

In the water solubility test, each organopolysiloxane was mixed with deionized water to a concentration of 10% at 25°C. The sample was rated "Pass (O)" for uniform dissolution and "Fail (×)" for white clouding.

**[Table 1]**

| | | | Example | | | Comparative Example |
|---|---|---|---|---|---|---|
| | | | 2-1 | 2-2 | 2-3 | 2-1 |
| Organopolysiloxane | | | Ep1 | Ep2 | Ep3 | Ep4 |
| Immediately after preparation | | Kinematic viscosity (mm²/s) | 429 | 218 | 361 | 726 |
| | | Water solubility | ○ | ○ | ○ | ○ |
| 25°C | 1 month | Kinematic viscosity (mm²/s) | 1040 | 301 | 384 | 1847 |
| | | Water solubility | ○ | ○ | ○ | × |
| | 2 months | Kinematic viscosity (mm²/s) | 2474 | 320 | 414 | 8016 |
| | | Water solubility | ○ | ○ | ○ | × |
| | 3 months | Kinematic viscosity (mm²/s) | 3561 | 373 | 420 | gelled |
| | | Water solubility | ○ | ○ | ○ | × |
| 5°C | 1 month | Kinematic viscosity (mm²/s) | 430 | 220 | 363 | 1010 |
| | | Water solubility | ○ | ○ | ○ | ○ |
| | 2 months | Kinematic viscosity (mm²/s) | 442 | 222 | 373 | 2679 |
| | | Water solubility | ○ | ○ | ○ | × |
| | 3 months | Kinematic viscosity (mm²/s) | 448 | 223 | 377 | 6969 |
| | | Water solubility | ○ | ○ | ○ | × |

As shown in Table 1, Comparative Example 2-1 using organopolysiloxane Ep4 free of disiloxane units and consisting of trisiloxane units showed a noticeable viscosity increase with the lapse of time and a noticeable lowering of water solubility because silanol was so active that condensation reaction took place. This material can be handled only immediately after preparation, indicating practically unacceptable quality.

In contrast, the organopolysiloxanes Ep1 to Ep3 in Examples 1-1 to 1-3 exhibit a similar change-with-time behavior at 25°C, but to a minimal extent, and show little changes during the 5°C storage.

### [3] Preparation and evaluation of primer composition

### [Examples 3-1 to 3-3 and Comparative Examples 3-1 to 3-5]

A composition was prepared by diluting the primer component shown in Table 2 with deionized water to a solid concentration of 30%. The composition was wipe coated onto a cold-rolled steel plate and dried in an environment of 25°C and 50% RH for 30 minutes.

Thereafter, an aqueous urethane coating material which was prepared by mixing 100 parts of aqueous coat-forming resin BURNOCK WD-551 (DIC Corp.) with 30 parts of isocyanate base curing agent BURNOCK DNW-5500 (DIC Corp.) and diluting with water, was coated thereon by means of a bar coater No. 14, allowed to stand in an environment of 25°C and 50% RH for 3 days, and cured at 80°C for 4 hours.

The coating thus obtained was evaluated by the following tests. The results are shown in Table 2.

### (1) Coating outer appearance

The coating was visually observed for any anomalies.
- ○:: no anomalies
- ×:: anomalies of foreign matter, unevenness, and white clouding

### (2) Initial adhesion

The test was carried out according to JIS K5600 by cutting the coating with a razor blade along 6 longitudinal and transverse cut lines at a spacing of 2 mm to define 25 cross-hatch sections, tightly pressing adhesive tape (Cellotape^{®}, Nichiban Co., Ltd.) to the coating, quickly peeling back the tape at 90°, and counting the number (X) of sections left unpeeled, which is expressed as X/25.

### (3) Boiling adhesion

The test sample was immersed in boiling water for 10 hours before it was evaluated for adhesion by the same test as the initial adhesion test.

### (4) Pencil hardness

The pencil hardness was measured according to the pencil scratch test of JIS K5600-5-4, under a load of 750 g.

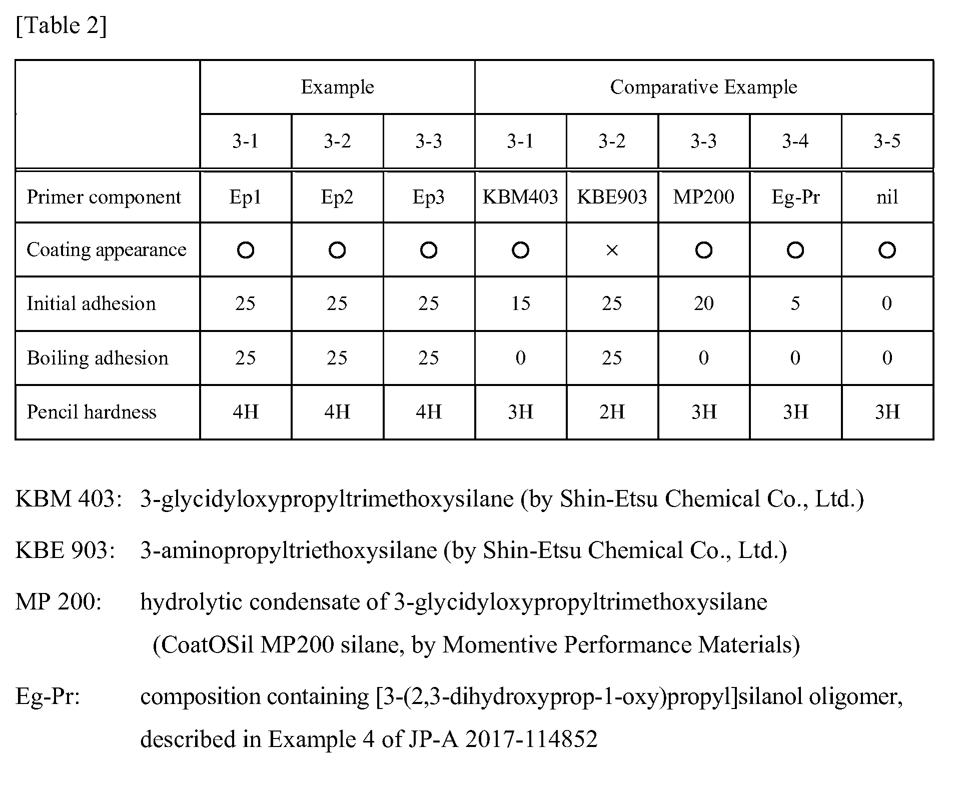

As shown in Table 2, the urethane coating compositions of Examples 3-1 to 3-3 using organopolysiloxanes Ep1 to Ep3 obtained in Examples 1-1 to 1-3 as the primer component were excellent in coating appearance, adhesion and hardness. These results show that the organopolysiloxane within the scope of the invention is useful as the adhesion contributing component in aqueous coating compositions with less environmental load and indicate a possibility that the organopolysiloxane is applied not only as the primer, but also as a tackifier of coating material internal addition type.

On the other hand, Comparative Examples 3-1 and 3-3 using 3-glycidyloxypropyltrimethoxysilane and the hydrolytic condensate thereof as the primer component resulted in a lack of adhesion.

Comparative Example 3-2 using the primer component having an amino group which is highly reactive with urethane coating material showed the result of satisfactory adhesion improvement, but indicated a tendency of excessive reactivity whereby the urethane coating material was significantly exacerbated in coating ability and the coating was degraded in outer appearance.

Comparative Example 3-4 showed the result of poor adhesion probably because the reactivity of ethylene glycol structure group with urethane coating material was insufficient.

## Claims

1. An organopolysiloxane having the formula (1): 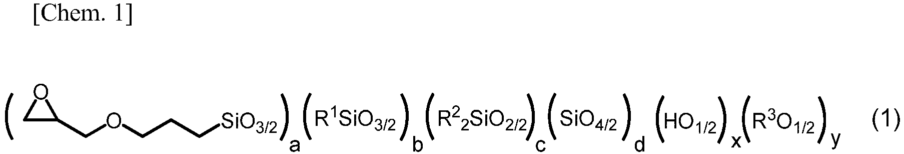 wherein R¹ is a C₁-C₁₀ monovalent hydrocarbon group, R² is each independently a C₁-C₁₀ monovalent hydrocarbon group which may be substituted with a glycidyloxy group, R³ is methyl or ethyl, a, b, c and d are numbers in the range: a ≥ 0.5, b ≥ 0, c > 0, d ≥ 0, and a+b+c+d = 1, x and y are numbers in the range: x ≥ 1 and y ≤ 0.5.

2. The organopolysiloxane of claim 1 wherein a, b, c and d are numbers in the range: 0.5 ≤ a ≤ 0.9, b = 0, 0.1 ≤ c ≤ 0.5, and d = 0.

3. A tackifier comprising the organopolysiloxane of claim 1 or 2.

4. An aqueous coating composition comprising the organopolysiloxane of claim 1 or 2.

5. A primer composition comprising the organopolysiloxane of claim 1 or 2.
